# DEMANDE DE BREVET EUROPEEN

(11) **EP 1 067 641 A1**
(43) Date de publication de la demande: **10.01.2001**
(21) Numéro de dépôt: 00401924.6
(22) Date de dépôt: 05.07.2000
(51) Int. Cl.: H01S 3/30, H04B 10/17

(54) **Amplificateur Raman avec système de pompage déporté**

(30) Priorité: 05.07.1999 FR 9908618
(71) Demandeur: ALCATEL, 75008 Paris (FR)
(72) Inventeur: Brandon, Eric, 92340 Bourg la Reine (FR); Blondel, Jean-Pierre, 78530 Buc (FR); Le Roux, Patrice, 91310 Montlhery (FR); Toullier, Denis, 45400 Fleury Les Aubrais (FR)
(74) Mandataire: Lamoureux, Bernard

(57) **Abrégé**

L'invention propose un système de transmission par fibre optique, avec une amplification distribuée déportée par diffusion Raman stimulée dans la fibre de ligne (3). Pour cela, le système de transmission présente une pompe (7) et une fibre de déport (8) permettant de coupler la lumière de pompe non pas directement au voisinage du récepteur (5), mais à distance de celui-ci.

L'invention permet dans le cas d'une préamplification, d'améliorer le rapport signal sur bruit. Pour une post-amplification, elle permet une meilleure amplification, avec une puissance de pompe plus importante que pour une pompe injectée immédiatement après l'émetteur.

## Description

La présente invention concerne le domaine des transmissions par fibres optiques, et notamment les systèmes de transmission sans répéteurs. Elle s'applique notamment aux systèmes de transmission à fibre optique, utilisant un multiplexage en longueur d'onde (en anglais "wavelength division multiplexing" ou WDM).

Une des solutions connues pour la transmission de signaux dans des fibres optiques consiste à disposer à intervalles réguliers le long du système de transmission des amplificateurs optiques, et notamment des amplificateurs à fibre optique dopée à l'erbium. Une telle solution est par exemple décrite dans Bergano, Long haul WDM transmission using optimum channel modulation : 32 x 5 Gbit/s 9300 km demonstration, OFC'97 post deadline 16. Les distances de transmission dans un tel système sont limitées par le rapport signal sur bruit, et notamment par la présence de bruit d'amplification spontanée (ASE, acronyme de l'anglais "amplification spontaneous noise") généré dans les amplificateurs.

Il a aussi été proposé dans un article Morten Nissov et autres, 100 Gb/s (10x10 Gb/s) WDM transmission over 7200 km using distribution Raman amplification, OFC'97, post deadline paper, d'utiliser dans un système de transmission uniquement une amplification distribuée par effet Raman stimulé (SRS, acronyme de l'anglais "Stimulated Raman Scattering") pour l'amplification à intervalles réguliers du signal. Cette solution permet une amélioration du rapport signal sur bruit d'environ 2 dB par rapport à une solution comparable utilisant uniquement des pompes discrètes. Une description de l'effet Raman et de l'amplification par effet Raman stimulé est donnée dans l'ouvrage de G.P. Agrawal, Nonlinear Fibre Optics, Academic Press 1980. L'amplification s'effectue par transfert de puissance entre une pompe de forte puissance et le signal à amplifier. La pompe et le signal peuvent être co-propagatifs, ou contra-propagatifs. Le gain d'amplification est une fonction croissante de l'intensité de la pompe et des caractéristiques physiques et chimiques de la fibre.

P. B. Hansen et autres, Rayleigh scattering limitations in distributed Raman pre-amplifiers, OFC'97 Technical digest, FA2, indique que la diffusion Rayleigh peut constituer une limitation à l'utilisation de l'amplification Raman dans des systèmes de transmission; cet article compare les limitations imposées dans des fibres DSF (acronyme de l'anglais Dispersion Shifted Fibers, fibre à dispersion décalée) et SCF (acronyme de l'anglais Silica Core Fiber, fibre à coeur en silice). Une pompe contra-propagative à 1,1 W est utilisée pour la préamplification Raman. Ce document est représentatif de l'utilisation de pompes contra-propagatives en réception pour une préamplification par effet Raman stimulé.

P. B. Hansen et autres, Unrepeated WDM transmission experiment with 8 channels of 10 Gb/s over 352 km, IEEE Photonics Technology Letters, vol. 8 no. 8, Août 1996, pp.1082-1084 décrit un système de transmission sans répéteur, cumulant une préamplification par effet Raman stimulé et une amplification déportée dans des fibres dopées à l'erbium. Du côté de l'émetteur est prévue une pompe à 1480 nm d'une puissance de 1 W, qui émet dans une fibre de 74,8 km; l'extrémité de la fibre est couplée à une fibre d'amplification dopée à l'erbium, insérée dans la fibre de ligne. Du côté du récepteur est prévue une première pompe à 1480 nm, d'une puissance de 0,6 W, qui est couplée dans la fibre de ligne, pour une préamplification par effet Raman stimulé. Est en outre prévue une seconde pompe 1480 nm, d'une puissance de 1,3 W, qui émet dans une fibre de 123,0 km; l'extrémité de la fibre est couplée à une fibre d'amplification dopée à l'erbium, insérée dans la fibre de ligne. Un réflecteur de pompe en amont de la pompe réfléchit vers le récepteur la pompe résiduelle sortant de la fibre dopée à l'erbium.

La préamplification Raman distribuée pose encore un problème de rapport signal à bruit. De fait, le signal qui subit la préamplification en fin de liaison est un signal de faible puissance. En outre, la puissance de pompe injectée est en pratique limitée par les non-linéarités, et par la combinaison du gain Raman et de l'effet Rayleigh. Des puissances de pompe au delà de 1,5 W sont difficiles à mettre en oeuvre.

En post-amplification, ce problème de rapport signal à bruit ne se pose pas, dans la mesure où le signal à amplifier est le signal fourni par l'émetteur ou par le répéteur dans le cas d'une liaison à répéteurs. Toutefois, les effets non-linéaires, et notamment l'effet Kerr limitent en pratique la puissance injectée dans la fibre, et donc l'intérêt de la post-amplification.

L'invention propose une solution à ces problèmes nouveaux ; cette solution est simple et efficace. Elle permet d'améliorer le rapport signal sur bruit dans les liaisons mettant en oeuvre une préamplification, ou d'augmenter le gain dans les liaisons mettant en oeuvre une post-amplification.

Plus précisément, l'invention propose un système de transmission par fibre optique, avec une amplification distribuée déportée par diffusion Raman stimulée dans la fibre de ligne.

De préférence, le système comprend des moyens de pompage, une fibre de déport déportant la lumière des moyens de pompage, et des moyens de couplage couplant dans la fibre de ligne la lumière déportée par la fibre de déport.

Dans un mode de réalisation, les moyens de pompage sont disposés côté récepteur.

Dans un autre mode de réalisation, les moyens de pompage sont disposés côté émetteur.

Dans un mode de réalisation, la lumière de pompage est couplée dans la fibre de ligne dans le même sens que les signaux transmis.

Dans un autre mode de réalisation, la lumière de pompage est couplée dans la fibre de ligne dans le sens inverse des signaux transmis.

Avantageusement, la fibre de déport présente une longueur comprise entre 10 et 50 km.

Le système peut en outre présenter un amplificateur discret pompé par la lumière résiduelle de l'amplification Raman distribuée.

D'autres caractéristiques et avantages de l'invention apparaîtront à la lecture de la description qui suit de modes de réalisation de l'invention, donnée à titre d'exemple et en référence aux dessins annexés, dont les dessins montrent :
- figure 1, une représentation schématique d'un système de transmission avec une préamplification Raman déportée ;
- figure 2, une représentation schématique d'un système de transmission avec une post-amplification Raman déportée ;
- figure 3, une représentation schématique d'un système de transmission avec une préamplification Raman déportée et une amplification discrète déportée.

L'invention propose, pour une amplification par effet Raman stimulé, de déporter la pompe; pour une pré-amplification, cette solution permet, toutes choses égales par ailleurs, d'augmenter le rapport signal sur bruit dans la liaison. Pour une post-amplification, cette solution permet de disposer du même gain, à une distance plus importante de l'émetteur.

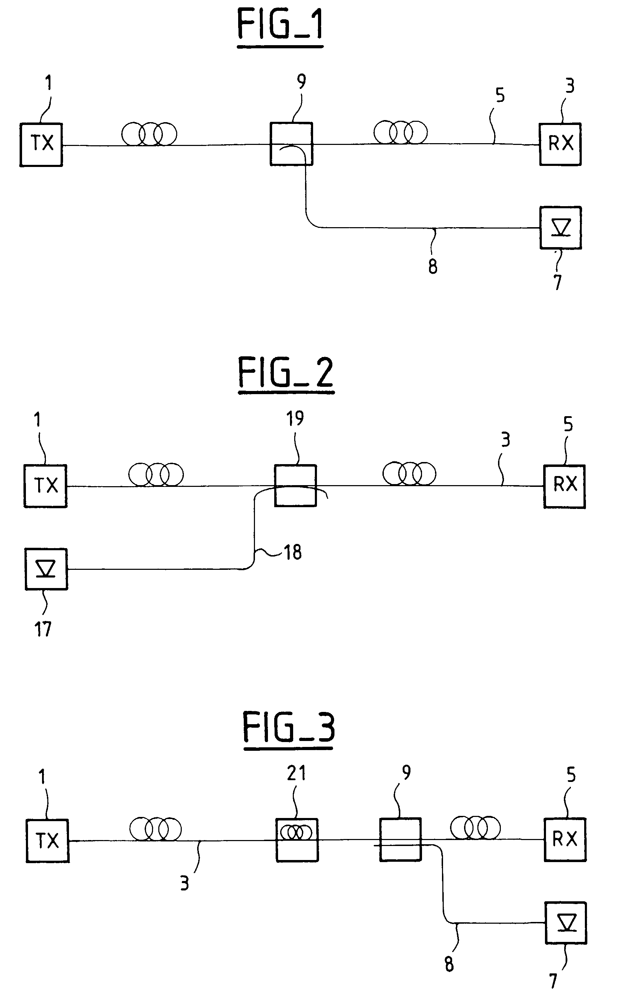

La figure 1 montre une représentation schématique d'un système de transmission selon un premier mode de réalisation de l'invention, avec une préamplification Raman déportée; le système de la figure 1 est un système de transmission à fibre optique sans répéteurs, avec une amplification distribuée par effet Raman stimulé dans la fibre de ligne; apparaissent donc sur la figure l'émetteur TX 1 et le récepteur RX 3, reliés par une fibre de ligne 5. Du côté de l'émetteur, le système présente une pompe 7; cette pompe sert à injecter dans la fibre de ligne 5 une lumière de pompage contra-propagative, qui assure une amplification par diffusion Raman stimulée.

Comme le montre la figure, l'amplification Raman est une amplification déportée; autrement dit, la pompe 7 n'est pas couplée directement dans la fibre de ligne au voisinage du récepteur 3, mais est couplée dans une fibre supplémentaire 8 ou fibre de déport; l'extrémité de la fibre de déport 8 est couplée dans la fibre de ligne 5, au moyen d'un coupleur 9. On pourrait utiliser d'autres moyens de pompage, par exemple un circulateur optique. La pompe 7 peut être une pompe d'un type connu en soi, et par exemple une pompe à semi-conducteur ou à laser; une longueur d'onde entre 1450 et 1500 nm est notamment appropriée. La pompe présente une puissance adaptée à la fibre de déport, de sorte à assurer une amplification dans la fibre de ligne. On peut choisir la puissance de pompe de telle sorte que la puissance couplée dans la fibre de ligne soit comprise entre 0,5 et 1,5 W, et soit par exemple voisine de 1 W. Cette valeur est adaptée à de la fibre PSCF (acronyme de l'anglais Pure Silica Core Fiber, fibre à coeur de silice); pour de la fibre NZ-DSF, on pourrait utiliser une puissance de pompe voisine de 0,5 W.

La fibre de déport 8 est choisie pour ses capacités à transmettre la pompe. On peut notamment choisir les fibres utilisées dans l'art antérieur pour le pompage déporté d'amplificateurs à l'erbium, et par exemple des fibres de type PSCF. La longueur de la fibre de déport est choisie en fonction de la puissance de la pompe à injecter dans la fibre de ligne, et de la puissance d'entrée des signaux à amplifier. Une longueur comprise entre 10 et 30 km est avantageuse.

Dans le cas d'une préamplification comme dans la figure 1, on peut utiliser une pompe d'une puissance de 2 W. Après propagation dans 15 km de fibre de déport du type PSCF, la puissance couplée dans la fibre de ligne est de l'ordre de 1 W.

Par rapport à une configuration connue, dans laquelle la pompe est injectée directement dans la fibre de ligne au niveau du récepteur, l'invention permet d'améliorer le rapport signal sur bruit. Il est en effet clair que les signaux subissant la l'amplification Raman déportée dans le système de la figure 1 ont une puissance supérieure à celle qu'auraient ces signaux dans le cas d'une préamplification Raman avec une pompe injectée au niveau du récepteur. Toutes choses égales par ailleurs, les signaux amplifiés par la pompe déportée présentent une puissance qui est d'environ 3 dB supérieure à la puissance des signaux amplifiés dans une préamplification classique. On obtient de la sorte une amélioration du rapport signal sur bruit qui est aussi de l'ordre de 3 dB.

Dans la fibre de déport, on peut prévoir des dispositifs pour permettre de dépasser la limitation habituelle de puissance de pompe injectée dans la fibre de déport, qui est de l'ordre de 1,5 W. On peut par exemple utiliser les moyens décrits dans la demande de brevet français déposée le 15.01.98 sous le numéro 98 00350, intitulée "Elimination de la limitation en puissance optique due à l'effet Raman dans les liaisons par fibre optique". Cette demande propose notamment de prévoir dans la fibre des sections dopées au dysprosium ou au terbium, ou encore des filtres ou des isolateurs optiques.

La figure 2 montre une représentation schématique d'un système de transmission avec une post-amplification Raman déportée; le système est analogue à celui de la figure 1, à cela près que la pompe 17 se trouve du côté de l'émetteur; la pompe 17 sert à injecter dans la fibre de ligne 5 une lumière de pompage co-propagative, qui assure une amplification par diffusion Raman stimulée.

Comme dans le système de la figure 1, l'amplification Raman est une amplification déportée; autrement dit, la pompe 17 n'est pas couplée directement dans la fibre de ligne au voisinage de l'émetteur, mais est couplée dans une fibre supplémentaire 18 ou fibre de déport; l'extrémité de la fibre de déport 18 est couplée dans la fibre de ligne 5, au moyen d'un coupleur 19.

On peut utiliser pour la pompe 17 et la fibre de déport 18 les mêmes éléments que ceux de la figure 1. La fibre de déport peut présenter une longueur de 30 km, la pompe présentant une puissance de 1 W environ lorsqu'elle est couplée dans la fibre de déport.

On obtient dans ce cas une puissance de 250 mW après une propagation de 30 km, soit un gain d'environ 4 dB du signal. L'invention permet donc ainsi un gain de l'ordre de 20 km sur la longueur de la liaison.

La figure 3 montre une représentation schématique d'un système de transmission avec une préamplification Raman déportée et une amplification discrète déportée. Le montage de la figure 3 est analogue à celui de la figure 1, à cela près qu'il comporte en outre une section de fibre dopée 21, en amont du coupleur dans le sens de propagation des signaux.

Le fonctionnement du système de la figure 3 est similaire à celui du système de la figure 1; toutefois, la pompe résiduelle, après l'amplification des signaux par effet Raman, est utilisée pour une amplification discrète dans la section de fibre dopée. L'invention utilise donc dans ce mode de réalisation le fait que les pompes dans les amplificateurs Raman distribuées sont puissantes, et que la puissance résiduelle après l'amplification Raman est encore utilisable à d'autres fins - notamment dans le cas de la figure 3 pour une amplification discrète.

Dans l'exemple de la figure 3, la section de fibre dopée est une section de fibre dopée à l'erbium, qui peut présenter une concentration d'erbium dans le coeur de fibre de 1000 ppm; elle présente une longueur de 25 m environ. La section de fibre dopée est disposée environ 100 km en amont du coupleur. De la sorte, pour une puissance de pompe injectée au niveau du coupleur de 1 W, la puissance résiduelle après amplification Raman est de l'ordre de 10 mW dans la fibre dopée.

On peut bien entendu utiliser une telle amplification discrète dans le montage de la figure 2.

Les exemples numériques ont été donnés pour une fibre PSCF. On pourrait aussi appliquer l'invention à de la fibre de ligne à dispersion décalée, pour laquelle la puissance injectée serait typiquement de l'ordre de 0,5 W. La longueur de la fibre de déport pourrait alors être de 30 km.

L'invention permet d'éliminer les problèmes liés à l'amplification erbium. Elle assure une meilleure platitude de gain; en outre, elle permet d'amplifier dans d'autres bandes de longueurs d'onde que celle de l'erbium, c'est-à-dire potentiellement dans toute la bande de 1300 à 1650 nm. On pourrait en particulier dans ce cas utiliser plusieurs pompes à des longueurs d'ondes différentes.

La fibre de déport permet d'utiliser une pompe très puissante.

L'invention a été décrite en référence à un système de transmission à fibre optique sans répéteur; elle s'applique toutefois aussi à des systèmes de transmission à répéteurs, dans lesquels on met en oeuvre une amplification distribuée par effet Raman. On peut dans ce cas mettre en oeuvre l'invention de la même façon, en prévoyant entre des répéteurs des fibres de déport. On entend dans une telle configuration par "côté émetteur" le répéteur en amont, et par "côté récepteur" le répéteur en aval.

Dans les modes de réalisation préférés, on utilise une pompe contra-propagative pour la préamplification, comme à la figure 1, ou une pompe co-propagative pour la post-amplification, comme à la figure 2. On pourrait clairement échanger les sens de propagation des pompes; on pourrait aussi ajouter dans les systèmes des figures 1, 2 ou 3 une pré-amplification ou une post-amplification Raman classique, avec une pompe injectée au voisinage du récepteur ou de l'émetteur.

## Revendications

1. Un système de transmission par fibre optique, avec une amplification distribuée déportée par diffusion Raman stimulée dans la fibre de ligne (3).

2. Le système selon la revendication 1, caractérisé en ce qu'il comprend des moyens de pompage (7, 17), une fibre de déport (8, 18) déportant la lumière des moyens de pompage, et des moyens de couplage (9, 19) couplant dans la fibre de ligne la lumière déportée par la fibre de déport.

3. Le système selon la revendication 1 ou 2, caractérisé en ce que les moyens de pompage (7) sont disposés côté récepteur (5).

4. Le système selon la revendication 1 ou 2, caractérisé en ce que les moyens de pompage (1 7) sont disposés côté émetteur (1 ).

5. Le système selon la revendication 2, 3 4, caractérisé en ce que la lumière de pompage est couplée dans la fibre de ligne dans le même sens que les signaux transmis.

6. Le système selon la revendication 2, 3 4, caractérisé en ce que la lumière de pompage est couplée dans la fibre de ligne dans le sens inverse des signaux transmis.

7. Le système selon l'une des revendications 2 à 6, caractérisé en ce que la fibre de déport présente une longueur comprise entre 10 et 50 km.

8. Le système selon l'une des revendications 1 à 7, caractérisé en ce qu'il présente en outre un amplificateur discret (21) pompé par la lumière résiduelle de l'amplification Raman distribuée.
